# EUROPEAN PATENT APPLICATION

(11) **EP 4 221 023 A1**
(43) Date of publication of application: **02.08.2023**
(21) Application number: 21871382.4
(22) Date of filing: 16.09.2021
(51) Int. Cl.: H04L 1/18, H04L 5/00

(54) **FEEDBACK CODEBOOK GENERATING METHOD, FEEDBACK CODEBOOK RECEIVING METHOD, COMMUNICATION NODE, AND STORAGE MEDIUM**

(30) Priority: 28.09.2020 CN 202011043432
(71) Applicant: ZTE Corporation, Shenzhen, Guangdong 518057 (CN)
(72) Inventor: YANG, Zhen, Shenzhen, Guangdong 518057 (CN); ZHANG, Nan, Shenzhen, Guangdong 518057 (CN); TIAN, Kaibo, Shenzhen, Guangdong 518057 (CN)
(74) Representative: Tiburzi, Andrea
(86) International application number: PCT/CN2021/118668
(87) International publication number: WO 2022/063011

(57) **Abstract**

Disclosed are a feedback codebook generating method and apparatus, a feedback codebook receiving method and apparatus, a communication node, and a storage medium. The feedback codebook generating method comprises: determining a configuration mode of a hybrid automatic repeat request (HARQ) process, the configuration mode of the HARQ process comprising "enable" and "disable"; and generating a feedback codebook according to the configuration mode of the HARQ process, the feedback codebook comprising feedback information corresponding to an enabled HARQ process.

## Description

### TECHNICAL FIELD

The present application relates to the field of wireless communication networks, for example, a feedback codebook generation method, a feedback codebook receiving method, an apparatus, a communication node, and a storage medium.

### BACKGROUND

In the Hybrid Automatic Repeat reQuest (HARQ) mechanism, a data receiving terminal may feed back acknowledgment (ACK) information or negative acknowledgment (NACK) information about received data to a sending terminal, so as to request the sending terminal to retransmit data unsuccessfully transmitted. Communication between a base station (BS) and a user equipment (UE) is used as an example, where the BS supports two configuration modes for two types of HARQ processes: an enabled HARQ process and a disabled HARQ process. For a disabled HARQ process, the BS does not support the retransmission of data unsuccessfully received by the UE in the physical layer. In this case, theoretically, the UE does not need to feed back the ACK information or NACK information to the BS. However, three types of feedback codebooks are supported in the communication protocol. In the process of constructing a feedback codebook, for all enabled and disabled HARQ processes, the UE must indiscriminately feed back the ACK information or the NACK information, which results in unnecessary overheads and affects the transmission efficiency of feedback information.

### SUMMARY

The present application provides a feedback codebook generation method, a feedback codebook receiving method, a communication node, and a storage medium, so as to reduce transmission overheads of a feedback codebook and improve transmission efficiency.

Embodiments of the present application provide a feedback codebook generation method. The method includes the steps described below.

A configuration mode of a HARQ process is determined, where the configuration mode of the HARQ process includes an enabled configuration mode and a disabled configuration mode; and a feedback codebook is generated according to the configuration mode of the HARQ process, where the feedback codebook includes feedback information corresponding to an enabled HARQ process. Embodiments of the present application further provide a feedback codebook receiving method. The method includes the steps described below.

A configuration mode of a HARQ process is configured, where the configuration mode of the HARQ process includes an enabled configuration mode and a disabled configuration mode; and a feedback codebook is received according to the configuration mode of the HARQ process, where the feedback codebook includes feedback information corresponding to an enabled HARQ process. Embodiments of the present application further provide a communication node including a memory, a processor, and a computer program which is stored on the memory and capable of running on the processor, where the processor, when executing the computer program, implements the preceding feedback codebook generation method.

Embodiments of the present application further provide a computer-readable storage medium for storing a computer program which, when executed by a processor, implements the preceding feedback codebook generation method.

### BRIEF DESCRIPTION OF DRAWINGS

FIG. 1 is a flowchart of a feedback codebook generation method according to an embodiment;
FIG. 2 is a diagram showing a first-type feedback codebook according to an embodiment;
FIG. 3 is a diagram illustrating that feedback spaces are allocated to PDSCHs scheduled by HARQ processes in slots according to an embodiment;
FIG. 4 is a diagram illustrating that feedback spaces are allocated to PDSCHs scheduled by enabled HARQ processes and successfully detected according to an embodiment;
FIG. 5 is a diagram illustrating that feedback spaces are allocated to PDSCHs scheduled by enabled HARQ processes according to an embodiment;
FIG. 6 is a diagram showing a second-type feedback codebook according to an embodiment;
FIG. 7 is another diagram illustrating that feedback spaces are allocated to PDSCHs scheduled by enabled HARQ processes according to an embodiment;
FIG. 8 is a diagram showing a third-type feedback codebook according to an embodiment;
FIG. 9 is a diagram illustrating that a feedback space is allocated to each HARQ process in a group which needs to report feedback information according to an embodiment;
FIG. 10 is another diagram illustrating that a feedback space is allocated to each HARQ process in a group which needs to report feedback information according to an embodiment;
FIG. 11 is a flowchart of a feedback codebook receiving method according to an embodiment;
FIG. 12 is a structural diagram of a feedback codebook generation apparatus according to an embodiment;
FIG. 13 is a structural diagram of a feedback codebook receiving apparatus according to an embodiment; and
FIG. 14 is a schematic diagram illustrating a hardware structure of a communication node according to an embodiment.

### DETAILED DESCRIPTION

The present application is described hereinafter in conjunction with drawings and embodiments. The embodiments described herein are intended to explain the present application. For ease of description, only part, not all, of structures related to the present application are illustrated in the drawings.

In the embodiments of the present application, a feedback codebook generation method is provided and applied to a first communication node. The first communication node, as a data receiving terminal, may send a feedback codebook to a second communication node (that is, a data sending terminal), so as to feed back ACK information or NACK information about received data and request the second communication node to retransmit data unsuccessfully transmitted. The method is applicable to different types of feedback codebooks. According to a configuration mode of a HARQ process, the feedback codebook is generated by the first communication node for enabled HARQ processes while no feedback information needs to be transmitted for disabled HARQ processes, which reduces transmission overheads of the feedback codebook and improves transmission efficiency.

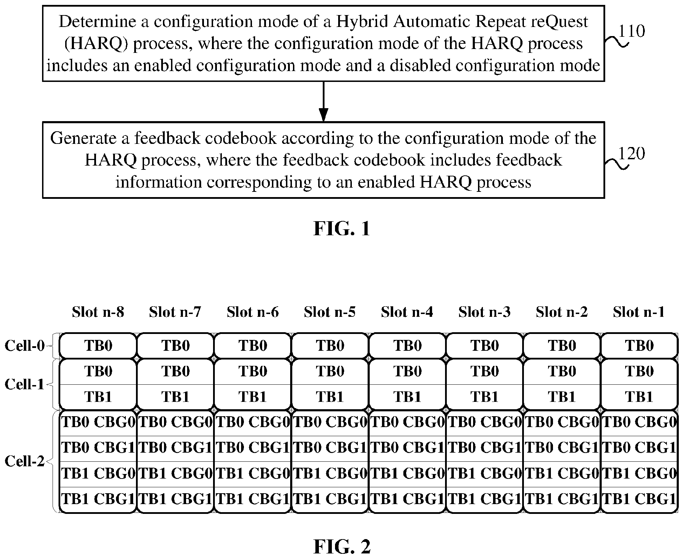

FIG. 1 is a flowchart of a feedback codebook generation method according to an embodiment. As shown in FIG. 1, the method provided in this embodiment includes 110 and 120.

In the 110, the configuration mode of the Hybrid Automatic Repeat reQuest (HARQ) process is determined, where the configuration mode of the HARQ process includes an enabled configuration mode and a disabled configuration mode.

In the 120, the feedback codebook is generated according to the configuration mode of the HARQ process, where the feedback codebook includes feedback information corresponding to an enabled HARQ process.

In this embodiment, the HARQ process is used for scheduling a physical downlink shared channel (PDSCH) to transmit data. The first communication node provides the second communication node with feedback about whether a PDSCH scheduled by each enabled HARQ process is detected successfully. If the PDSCH scheduled by each enabled HARQ process is detected successfully, the ACK information is fed back. Otherwise, the NACK information is fed back. The second communication mode may configure a configuration mode for each HARQ process and indicate the configuration mode of each HARQ process to the first communication node. HARQ processes include the enabled HARQ processes and the disabled HARQ processes. The feedback codebook includes feedback information corresponding to a respective enabled HARQ process, but does not include or includes only little feedback information of a disabled HARQ process. For example, in the case where the disabled HARQ processes and the enabled HARQ processes are in the same slot, the feedback codebook includes feedback information corresponding to the enabled HARQ processes in the slot and may also include feedback information of the disabled HARQ processes in the slot.

In this embodiment, there are three types of feedback codebooks including a Type-1 codebook, a Type-2 codebook, and a Type-3 codebook. The second communication node may indicate, through radio resource control (RRC), medium access control (MAC), or downlink control information (DCI), to the first communication node which type of feedback codebook is adopted.

In an embodiment, the following step is further included.

In 1010, slot set information is received, where the slot set information includes a slot included in each slot set and a configuration mode of a HARQ process corresponding to each slot set.

In this embodiment, for the Type-1 feedback codebook, the second communication node may divide slots into at least one slot set. Each slot set includes at least one slot, and each slot set corresponds to one configuration mode of the HARQ process. The second communication node sends the slot set information to the first communication node, so as to indicate a slot set in which the enabled HARQ processes exist. For the slot set in which the enabled HARQ processes exist, the first communication node feeds back the ACK information or the NACK information. For example, the slots are divided into slot set 1 and slot set 2. For slot set 1, the second communication node uses the enabled HARQ processes for scheduling PDSCHs, that is, each slot in slot set 1 corresponds to the HARQ processes with the configuration mode being the enabled configuration mode. For slot set 2, the second communication node uses the disabled HARQ processes for scheduling the PDSCHS, that is, each slot in slot set 2 corresponds to the HARQ processes with the configuration mode being the disabled configuration mode.

In an embodiment, the 120 includes the following.

Feedback spaces are allocated to PDSCHs scheduled by HARQ processes in each slot in the slot set whose HARQ processes are with the configuration mode being the enabled configuration mode; and feedback information corresponding to a respective HARQ process in the slot is inserted into a respective feedback space among the feedback spaces so that the feedback codebook is obtained. For example, each slot in slot set 1 corresponds to the HARQ processes with the configuration mode being the enabled configuration mode, and each slot in slot set 2 corresponds to the HARQ processes with the configuration mode being the disabled configuration mode. In this case, the first communication node allocates the feedback space to a PDSCH scheduled by each HARQ process in slot set 1 and inserts the ACK information or the NACK information according to a detection result of the PDSCH. For the HARQ processes in slot set 2, neither the ACK information nor the NACK information needs to be fed back. During the generation of the feedback codebook, no feedback space needs to be allocated to the PDSCHs scheduled by the HARQ processes in slot set 2.

In an embodiment, the feedback codebook further includes: a cell, a slot, a transmission block (TB), and a code block group (CBG) which are associated with the feedback information.

FIG. 2 is a diagram showing a first-type feedback codebook according to an embodiment. In this embodiment, the feedback codebook is the Type-1 codebook, which is constructed based on four dimensions: the cell, the slot, the transmission block, and the code block group. The size of the Type-1 codebook depends on configuration information of an RRC layer. In the case where configurations are determined, the codebook has a fixed size. The missed detection of one or more PDSCHs will not cause different understandings between the second communication node and the first communication node on the size of the codebook and an association relationship between the PDSCH and the feedback information. Therefore, the Type-1 codebook has relatively good robustness.

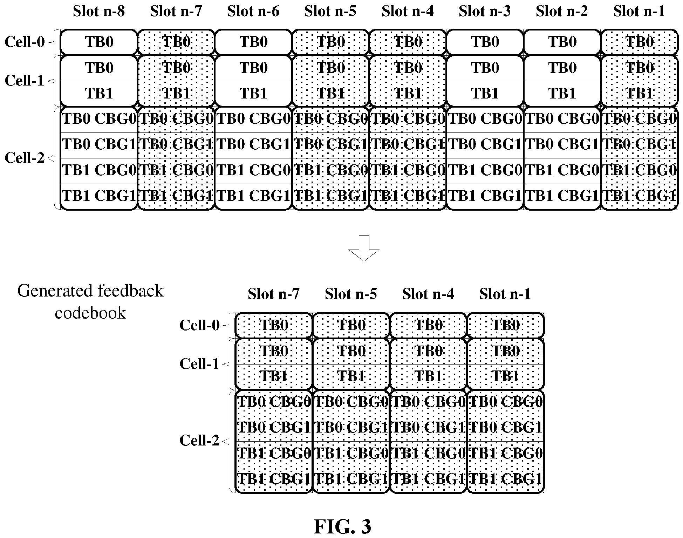

As shown in FIG. 2, each bold rectangular pane corresponds to the feedback space of one PDSCH occasion, and each rectangular check corresponds to an information bit of one piece of feedback information (the ACK information or the NACK information). In FIG. 2, three cells are configured for the first communication node, where Cell-0 is configured with one TB, that is TB0, Cell-1 is configured with two TBs at most, that is, the two TBs include TB0 and TB1. Cell-2 is configured with two TBs at most, that is, the two TBs include TB0 and TB1, and a CBG feedback mode in which two CBGs at most are provided, that is, the two CBGs include CBG-0 and CBG-1. If the first communication node receives a PDSCH on one PDSCH occasion, the ACK information or the NACK information is inserted, according to a detection result of the PDSCH, into an information bit corresponding to the PDSCH occasion. If the first communication node does not receive the PDSCH on the PDSCH occasion, the NACK information is inserted into the information bit corresponding to the PDSCH occasion. That is, there is no association between information bits in the Type-1 codebook and the configuration mode of the HARQ processes used for scheduling the PDSCHs. Though the HARQ processes are configured to be disabled, the ACK information or the NACK information also needs to be fed back. Otherwise, the size of the codebook will change dynamically, which causes the Type-1 codebook to lose the robustness. FIG. 3 is a diagram illustrating that feedback spaces are allocated to PDSCHs scheduled by HARQ processes in slots according to an embodiment. As shown in FIG. 3, in this embodiment, based on the Type-1codebook, the feedback spaces of the PDSCHs in the slot set whose HARQ processeswith the configuration mode being the disabled configuration mode are eliminated. For example, the second communication node notifies the first communication node through RRC signaling that Slot n-8, Slot n-6, Slot n-3, and Slot n-2 belong to slot set 2, and Slot n-7, Slot n-5, Slot n-4, and Slot n-1 belongs to slot set 1 (shown in dotted regions). Each slot in slot set 1 corresponds to the HARQ processes with the configuration mode being the enabled configuration mode, and each slot in slot set 2 corresponds to the HARQ processes with the configuration mode being the disabled configuration mode. In this case, the first communication node only needs to allocate the feedback spaces to the PDSCHs scheduled by the HARQ processes in each slot in slot set 1 and insert the ACK information or the NACK information according to detection results of the PDSCHs so that the feedback codebook is generated. The feedback codebook does not include feedback information corresponding to the HARQ processes in slot set 2.

In an embodiment, step 120 includes the followings.

The feedback spaces are allocated to PDSCHs scheduled by HARQ processes in a slot in which at least one enabled HARQ process exists and a PDSCH scheduled by the at least one enabled HARQ process is successfully detected; and feedback information corresponding to a respective HARQ process in the slot is inserted into a respective feedback space among the feedback spaces so that the feedback codebook is obtained. Feedback information corresponding to disabled HARQ processes in the slot is the NACK information.

In this embodiment, for the Type-1 codebook, if the at least one enabled HARQ process is used for scheduling the PDSCH in the slot and the PDSCH scheduled by the at least one enabled HARQ process is detected successfully, the first communication node allocates the feedback space to a PDSCH scheduled by each HARQ process in the slot and inserts the ACK information or the NACK information. For the enabled HARQ process in the slot, the ACK information or the NACK information is inserted according to a detection result of the PDSCH. For the disabled HARQ processes in the slot, the NACK information is inserted directly. In this case, the feedback codebook includes not only the feedback information corresponding to the enabled HARQ process in the slot but also the feedback information corresponding to the disabled HARQ processes in the slot.

In an embodiment, the feedback codebook does not include feedback information corresponding to HARQ processes in a slot whose all HARQ processes are with the configuration mode being the disabled configuration mode or a slot in which at least one enabled HARQ process exists and a PDSCH scheduled by each enabled HARQ process is unsuccessfully detected.

In this embodiment, no feedback space is allocated to PDSCHs scheduled by the HARQ processes in the slot whose all HARQ processes are with the configuration mode being the disabled configuration mode or the slot in which enabled HARQ processes exist and PDSCHs scheduled by the enabled HARQ processes are all unsuccessfully detected, that is, neither the ACK information nor the NACK information is fed back, which reduces the transmission overheads of the feedback codebook.

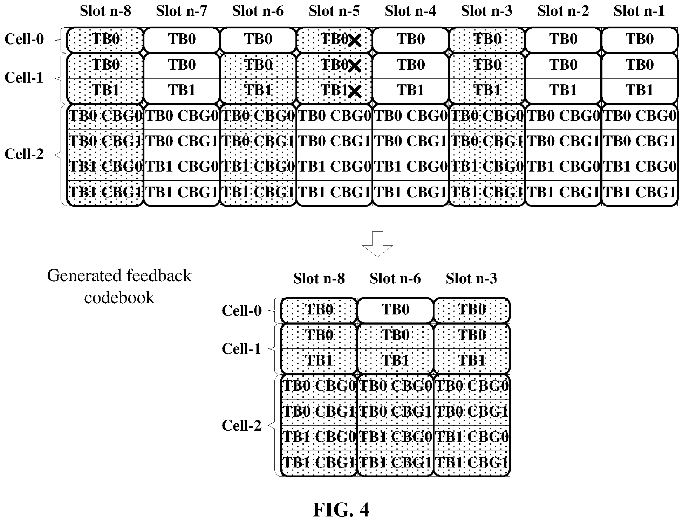

FIG. 4 is a diagram illustrating that feedback spaces are allocated to PDSCHs scheduled by enabled HARQ processes and successfully detected. In this embodiment, based on the Type-1codebook, the feedback spaces of the PDSCHs in the slot set whose HARQ processes are with the configuration mode being the disabled configuration mode are eliminated. The feedback spaces of the PDSCHs in the slot in which the PDSCHs scheduled by the enabled HARQ processes are all unsuccessfully detected are also eliminated. As shown in FIG. 4, PDSCH occasions shown in dotted regions correspond to the HARQ processes with the configuration mode being the enabled configuration mode while PDSCH occasions shown in white regions correspond to the HARQ processes with the configuration mode being the disabled configuration mode. In Slot n-8 and Slot n-3, HARQ processes scheduling PDSCHs are all enabled, and the feedback spaces are allocated to the PDSCHs scheduled by the HARQ processes in Slot n-8 and Slot n-3. In Slot n-7, Slot n-4, Slot n-2, and Slot n-1, HARQ processes scheduling PDSCHs are all disabled, and no feedback space is allocated to the PDSCHs scheduled by the HARQ processes in these slots. In addition, in Slot n-6 and Slot n-5, PDSCHs scheduled by enabled HARQ processes and PDSCHs scheduled by disabled HARQ processes exist at the same time. In Slot n-5, the PDSCHs scheduled by the enabled HARQ processes are all detected incorrectly. In this case, no feedback space is allocated to the PDSCHs scheduled by the HARQ processes in Slot n-5. In Slot n-6, the PDSCHs scheduled by the enabled HARQ processes are detected successfully, and the feedback spaces of the PDSCHs corresponding to this slot are all retained. In this case, for the PDSCHs scheduled by the enabled HARQ processes in Slot n-6, the ACK information or the NACK information is inserted into corresponding feedback spaces according to detection results, and for the PDSCHs scheduled by the disabled HARQ processes, the NACK information is inserted into corresponding feedback spaces.

In an embodiment, the 120 includes the steps described below.

A feedback space is allocated to the PDSCH scheduled by each enabled HARQ process, and no feedback space is allocated to a PDSCH scheduled by the disabled HARQ process. The feedback information corresponding to a respective enabled HARQ process is inserted into the feedback space so that the feedback codebook is obtained.

In this embodiment, for the Type-1 codebook, the feedback space is allocated to the PDSCH scheduled by each enabled HARQ process, and the ACK information or the NACK information is inserted according to a detection result of the PDSCH. No feedback space is allocated to the PDSCH scheduled by the disabled HARQ process.

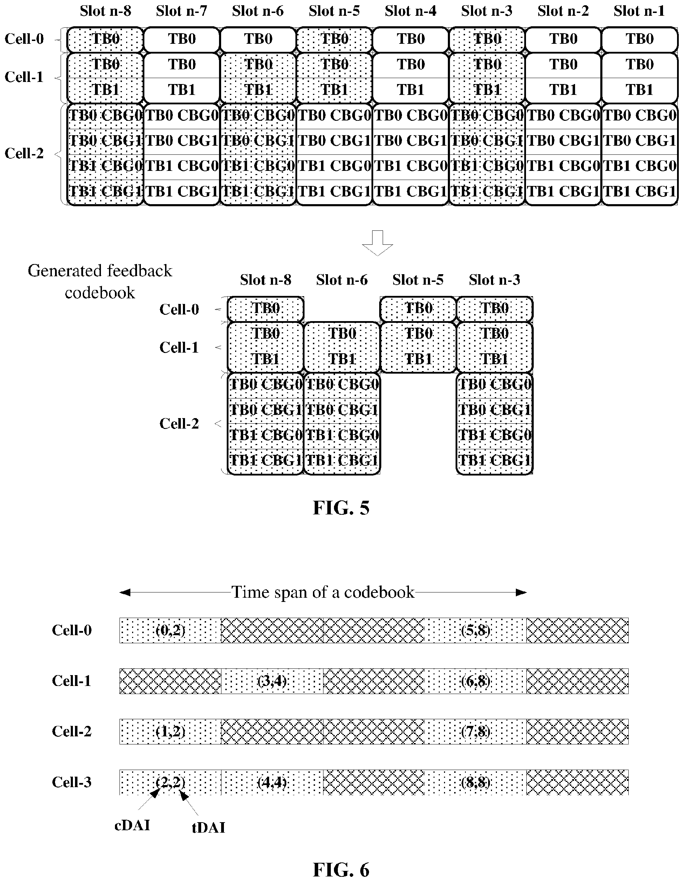

FIG. 5 is a diagram illustrating that feedback spaces are allocated to PDSCHs scheduled by enabled HARQ processes. In this embodiment, based on the Type-1 codebook, the feedback spaces of the PDSCHs scheduled by the disabled HARQ processes are eliminated. As shown in FIG. 5, PDSCH occasions shown in dotted regions correspond to the HARQ processes with the configuration mode being the enabled configuration mode while PDSCH occasions shown in white regions correspond to the HARQ processes with the configuration mode being the disabled configuration mode. In Slot n-8 and Slot n-3, HARQ processes scheduling PDSCHs are all enabled, and the feedback spaces are allocated to the PDSCHs scheduled by the HARQ processes in Slot n-8 and Slot n-3. In Slot n-7, Slot n-4, Slot n-2, and Slot n-1, HARQ processes scheduling PDSCHs are all disabled, and no feedback space is allocated to the PDSCHs scheduled by the HARQ processes in these slots. In addition, in Slot n-6 and Slot n-5, PDSCHs scheduled by enabled HARQ processes and PDSCHs scheduled by disabled HARQ processes exist at the same time. The feedback spaces are allocated to only the PDSCHs scheduled by the enabled HARQ processes.

In an embodiment, the following is further included.

In 1020, the DCI is received, where the DCI includes a first parameter, a second parameter, and a third parameter of each HARQ process. The feedback codebook further includes the first parameter, the second parameter, and the third parameter which are associated with the feedback information, where the first parameter is used for indicating the number of transmissions of PDSCHs during the period from when the DCI is received to when a target HARQ process schedules a PDSCH; the second parameter is used for indicating the total number of transmissions of PDSCHs during the period from when the DCI is received to the end of a slot in which the target HARQ process schedules the PDSCH; and the third parameter is used for indicating the number of transmissions of PDSCHs scheduled by enabled HARQ processes during the period from when the DCI is received to the end of the slot in which the target HARQ process schedules the PDSCH.

In this embodiment, for the Type-2 codebook, the feedback space is allocated to the PDSCH scheduled by each enabled HARQ process, and the ACK information or the NACK information is inserted. No feedback space is allocated to the PDSCH scheduled by the disabled HARQ process. In addition, the feedback codebook is related to the first parameter, the second parameter, and the third parameter of each HARQ process.

FIG. 6 is a diagram showing a second-type feedback codebook according to an embodiment. As shown in FIG. 6, PDSCHs shown in dotted regions are scheduled by the HARQ processes, and PDSCHs shown in grid regions are not scheduled by the HARQ processes. In the standard protocol, the Type-2 codebook is generated according to an indication by a binary parameter (cDAI, tDAI) in the DCI, where the cDAI indicates the number of transmissions of PDSCHs during the period from when the DCI is received to when a current target HARQ process schedules a PDSCH, and the tDAI indicates the total number of transmissions of PDSCHs on all carriers during the period from when the DCI is received to a slot in which the PDSCH scheduled by the current target HARQ process exists, that is, a maximum cDAI value on all carriers currently. For example, the PDSCH shown in a fourth dotted rectangular pane in Cell-2 corresponds to the binary parameter (7, 8). The HARQ process scheduling the PDSCH is used as the target HARQ process. During the period from when the DCI is received to when the target HARQ process schedules the PDSCH, the number of transmissions of the PDSCHs is 7. During the period from when the DCI is received to the end of the slot in which the target HARQ process schedules the PDSCH, the total number of transmissions of the PDSCHs on all carriers is 8. The first communication node may determine, by detecting the (cDAI, tDAI), whether the missed detection of the PDSCHs occurs. No matter whether the missed detection of the PDSCHs occurs or not, the size of the Type-2 codebook will not change and is not related to the configuration mode of the HARQ process.

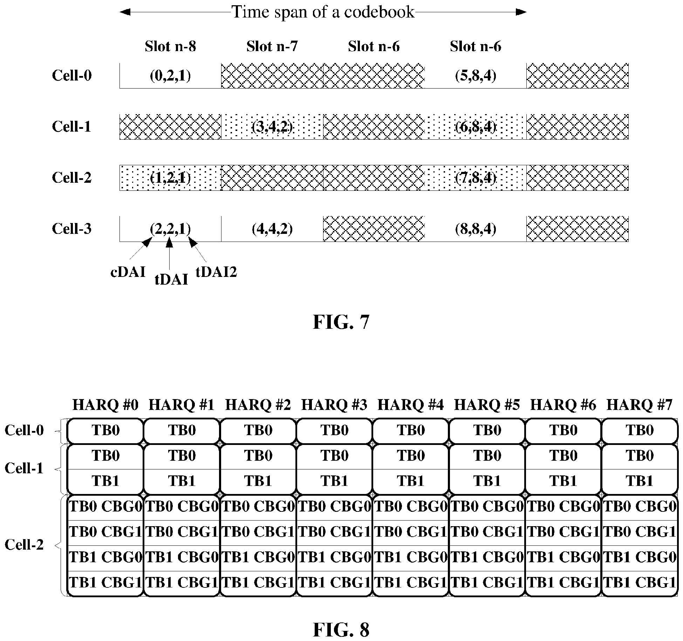

FIG. 7 is another diagram illustrating that feedback spaces are allocated to PDSCHs scheduled by enabled HARQ processes. As shown in FIG. 7, in this embodiment, PDSCHs shown in white regions are scheduled by the disabled HARQ processes, PDSCHs shown in dotted regions are scheduled by the enabled HARQ processes, and PDSCHs shown in grid regions are not scheduled by the HARQ processes. Based on the Type-2 codebook, the DCI includes the first parameter (that is, the cDAI), the second parameter (that is, the tDAI), and the third parameter (denoted by a tDAI2) of each HARQ process, where the third parameter indicates the number of transmissions of the PDSCHs scheduled by the enabled HARQ processes on all carriers during the period from when the DCI is received to the slot in which the PDSCH scheduled by the current target HARQ process exists. For example, the PDSCH shown in a fourth dotted rectangular pane in Cell-2 corresponds to the ternary parameter (7, 8, 4). The HARQ process scheduling the PDSCH is used as the target HARQ process. During the period from when the DCI is received to when the target HARQ process schedules the PDSCH, the number of transmissions of the PDSCHs is 7. During the period from when the DCI is received to the end of the slot in which the target HARQ process schedules the PDSCH, the total number of transmissions of the PDSCHs on all carriers is 8. During the period from when the DCI is received to the end of the slot in which the target HARQ process schedules the PDSCH, the number of transmissions of the PDSCHs scheduled by the enabled HARQ processes on all carriers is 4. In the case where the DCI is received, the first communication node allocates the feedback spaces to the PDSCHs scheduled by the enabled HARQ processes according to the configuration mode of each HARQ process and inserts the ACK information or the NACK information according to detection results of the PDSCHs. The first communication node may determine, by detecting the ternary parameter (cDAI, tDAI, tDAI2), whether the missed detection of the PDSCHs occurs and whether the missed detection of the PDSCHs scheduled by the enabled HARQ processes occurs so that the size of the feedback codebook and positions corresponding to the PDSCHs scheduled by the enabled HARQ processes in the feedback spaces are determined.

In an embodiment, the following is further included.

In 1030, process group information is received, where the process group information includes enabled HARQ processes included in each group.

In 1040, the DCI is received, where the DCI is used for indicating a group which needs to report the feedback information.

In this embodiment, for the Type-3 codebook, the second communication node divides the enabled HARQ processes into groups and sends the process group information to the first communication node. Based on this, the first communication node determines, according to an indication by the DCI, the group which needs to report the feedback information, allocates the feedback space to a PDSCH scheduled by each enabled HARQ process in the group and inserts the ACK information or the NACK information, and allocates no feedback space to a group which does not need to report the feedback information.

In an embodiment, step 120 includes the following.

The feedback space is allocated to each HARQ process in the group which needs to report the feedback information; and feedback information corresponding to a respective HARQ process is inserted into the feedback space so that the feedback codebook is obtained.

In this embodiment, for the Type-3 codebook, the feedback space is allocated to each enabled HARQ process in the group which needs to report the feedback information, where the group which needs to report the feedback information is indicated by the DCI, and the ACK information or the NACK information is inserted. No feedback space is allocated to PDSCHs scheduled by HARQ processes in a group which is not indicated by the DCI.

For example, the enabled HARQ processes are divided into K groups, where K ≥ 1. In the case where K > 1, the second communication node notifies the process group information to the first communication node through the RRC signaling, where the process group information includes the number of groups, HARQ processes corresponding to each group, and the like. The group which needs to report the feedback codebook is indicated by the second communication node to the first communication node through DCI signaling. According to the group indicated by the DCI signaling, the first communication node allocates the feedback spaces to the enabled HARQ processes in the group and generates the feedback codebook.

In an embodiment, the feedback codebook further includes a cell, a HARQ process, a transmission block, and a code block group which are associated with the feedback information.

FIG. 8 is a diagram showing a third-type feedback codebook according to an embodiment. In this embodiment, the feedback codebook is the Type-3 codebook, which is constructed based on four dimensions: the cell, the HARQ process, the transmission block, and the code block group. As shown in FIG. 8, each bold rectangular pane corresponds to the feedback space of one PDSCH occasion, and each rectangular check corresponds to an information bit of one piece of feedback information. In FIG. 8, three cells are configured for the first communication node, where Cell-0 is configured with one TB, that is TB0, Cell-1 is configured with two TBs at most, that is, the two TBs include TB0 and TB1. Cell-2 is configured with two TBs at most, that is, the two TBs include TB0 and TB1, and a CBG feedback mode in which two CBGs at most are provided, that is, the two CBGs include CBG-0 and CBG-1. The second communication node triggers the first communication node through the DCI signaling to report the feedback codebook. For each HARQ process corresponding to each cell, if the second communication node uses the HARQ process for scheduling a PDSCH, the first communication node inserts the ACK information or the NACK information into a corresponding space according to a detection result of the PDSCH. If the second communication node does not use the HARQ process for scheduling the PDSCH, NACK needs to be inserted into the corresponding feedback space.

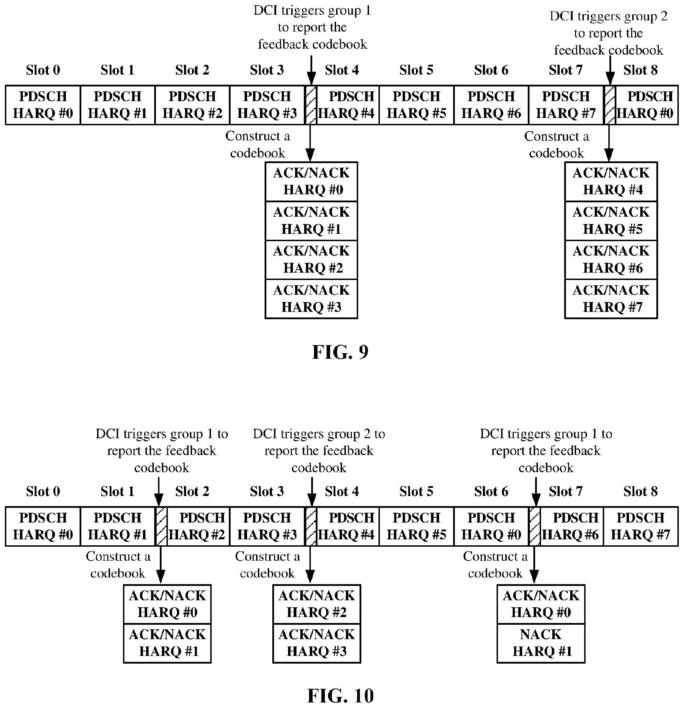

FIG. 9 is a diagram illustrating that a feedback space is allocated to each HARQ process in a group which needs to report feedback information. In this embodiment, based on the Type-3 codebook, the feedback spaces are allocated to only the PDSCHs scheduled by the enabled HARQ processes in the group indicated in the DCI, and feedback spaces corresponding to the PDSCHs scheduled by the HARQ processes in the group which is not indicated by the DCI are eliminated, which reduces the overheads of the feedback codebook. As shown in FIG. 9, in Cell-0, the second communication node configures eight enabled HARQ processes (denoted by HARQ #0 to HARQ #8) for the first communication node, where HARQs #0/1/2/3 are divided into group 1, and HARQs #4/5/6/7 are divided into group 2. The second communication node notifies the process group information to the first communication node through the RRC signaling. In slot 4 and slot 8, the second communication node triggers, through the DCI, the first communication node to report the feedback codebook of group 1 and the feedback codebook of group 2, respectively. Thus, when constructing the feedback codebook, the first communication node allocates the feedback spaces to only the HARQ processes in the group indicated by the DCI. In addition, the second communication node may cyclically trigger, through the DCI signaling, group 1 and group 2 to report the feedback codebooks. A ping-pong operation is formed between the HARQ processes in the two groups. Thus, the second communication node BS can continuously transmit the PDSCHs to the first communication node.

FIG. 10 is another diagram illustrating that a feedback space is allocated to each HARQ process in a group which needs to report feedback information. As shown in FIG. 10, in Cell-0, the second communication node configures eight HARQ processes (denoted by HARQ #0 to HARQ #8) for the first communication node, where HARQs #0/1/2/3 are the enabled HARQ processes, and HARQs #4/5/6/7 are the disabled HARQ processes. For HARQs #0/1/2/3, HARQs #0/1 are divided into one group denoted by group 1, and HARQs #2/3 are divided into one group denoted by group 2. The second communication node notifies the process group information to the first communication node through the RRC signaling. In slot 2 and slot 7, the second communication node triggers, through the DCI, the first communication node to report the feedback codebook of group 1, and in slot 4, the second communication node triggers, through the DCI, the first communication node to report the feedback codebook of group 2. The first communication node allocates, according to the group indicated by the DCI, the feedback spaces to the enabled HARQ processes in the group and inserts the ACK information or the NACK information into corresponding feedback spaces according to detection results of the PDSCHs. For example, in slot 7, the first communication node is triggered to report the feedback codebook of group 1. However, in slots 4/5/6, the first communication node detects only a PDSCH scheduled by HARQ #0. When the codebook is constructed, for the PDSCH scheduled by HARQ #0, the ACK information is inserted into the feedback space, and for a PDSCH scheduled by HARQ #1, the ACK information is inserted into the feedback space. No feedback space is allocated to PDSCHs scheduled by the disabled HARQ processes, and the disabled HARQ processes are not involved in the construction of the codebook.

The embodiments of the present application further provide a feedback codebook receiving method which is applied to the second communication node. The second communication node served as the data sending terminal may receive the feedback codebook reported by the first communication node and retransmit, according to the feedback codebook, the data unsuccessfully transmitted. The method is applicable to the different types of feedback codebooks. The second communication node configures the configuration modes of the HARQ processes, receives the feedback codebook for the enabled HARQ processes, and does not need to receive the feedback information for the disabled HARQ processes, which reduces the transmission overheads of the feedback codebook and improves the transmission efficiency. Operations performed by the second communication node correspond to the operations performed by the first communication node. For technical details not described in detail in the embodiment, reference may be made to any one of the preceding embodiments.

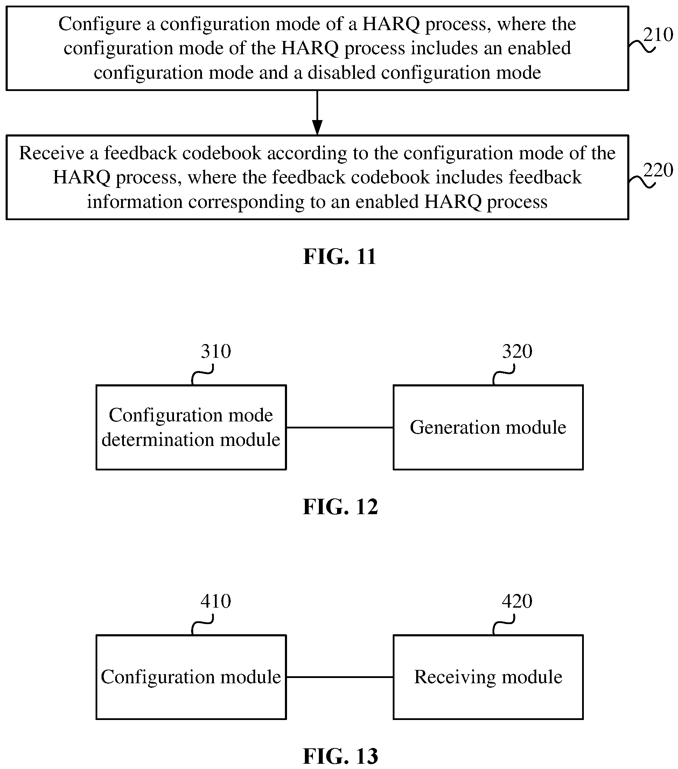

FIG. 11 is a flowchart of a feedback codebook receiving method according to an embodiment. As shown in FIG. 11, the method provided in this embodiment includes 210 and 220.

In 210, a configuration mode of a HARQ process is configured, where the configuration mode of the HARQ process includes an enabled configuration mode and a disabled configuration mode. In 220, a feedback codebook is received according to the configuration mode of the HARQ process, where the feedback codebook includes feedback information corresponding to an enabled HARQ process.

In an embodiment, the method further includes the following.

In 2010, slot set information is sent, where the slot set information includes a slot included in each slot set and a configuration mode of a HARQ process corresponding to each slot set.

In an embodiment, the feedback codebook includes feedback information corresponding to a respective HARQ process in each slot in a slot set whose HARQ processes are with the configuration mode being the enabled configuration mode, and the feedback codebook does not include the feedback information of the disabled HARQ process.

In an embodiment, the feedback codebook includes feedback information corresponding to a respective HARQ process in a slot in which at least one enabled HARQ process exists and a PDSCH scheduled by the at least one enabled HARQ process is detected successfully. Feedback information corresponding to disabled HARQ processes in the slot is the NACK information.

In an embodiment, the feedback codebook does not include feedback information corresponding to HARQ processes in a slot whose all HARQ processes are with the configuration mode being the disabled configuration mode or a slot in which at least one enabled HARQ process exists and a PDSCH scheduled by each enabled HARQ process is unsuccessfully detected.

In an embodiment, the feedback codebook includes the feedback information corresponding to a respective enabled HARQ process and does not include the feedback information of the disabled HARQ process.

In an embodiment, the feedback codebook further includes: a cell, a slot, a transmission block, and a code block group which are associated with the feedback information.

In an embodiment, the following step is further included.

In 2020, the DCI is sent, where the DCI includes a first parameter, a second parameter, and a third parameter of each HARQ process.

The feedback codebook further includes the first parameter, the second parameter, and the third parameter which are associated with the feedback information, where the first parameter is used for indicating the number of transmissions of PDSCHs during the period from when the DCI is received to when a target HARQ process schedules a PDSCH; the second parameter is used for indicating the total number of transmissions of PDSCHs during the period from when the DCI is received to the end of a slot in which the target HARQ process schedules the PDSCH; and the third parameter is used for indicating the number of transmissions of PDSCHs scheduled by enabled HARQ processes during the period from when the DCI is received to the end of the slot in which the target HARQ process schedules the PDSCH.

In an embodiment, the following steps are further included.

In 2030, process group information is sent, where the process group information includes enabled HARQ processes included in each group.

In 2040, the DCI is sent, where the DCI is used for indicating a group which needs to report the feedback information.

In an embodiment, the feedback codebook includes feedback information of each HARQ process in the group which needs to report the feedback information.

In an embodiment, the feedback codebook further includes a cell, a HARQ process, a transmission block, and a code block group which are associated with the feedback information.

The embodiments of the present application further provide a feedback codebook generation apparatus. FIG. 12 is a structural diagram of a feedback codebook generation apparatus according to an embodiment. As shown in FIG. 12, the feedback codebook generation apparatus includes a configuration mode determination module 310 and a generation module 320.

The configuration mode determination module 310 is configured to determine a configuration mode of a HARQ process, where the configuration mode of the HARQ process includes an enabled configuration mode and a disabled configuration mode. The generation module 320 is configured to generate a feedback codebook according to the configuration mode of the HARQ process, where the feedback codebook includes feedback information corresponding to an enabled HARQ process. According to configuration modes of HARQ processes, the feedback codebook generation apparatus in this embodiment generates the feedback codebook for the enabled HARQ processes and does not need to transmit the feedback information for the disabled HARQ processes, which reduces the transmission overheads of the feedback codebook and improves the transmission efficiency.

In an embodiment, the feedback codebook generation apparatus further includes a first receiving module.

The first receiving module is configured to receive slot set information, where the slot set information includes a slot included in each slot set and a configuration mode of a HARQ process corresponding to each slot set.

In an embodiment, the generation module 320 is configured to perform the operations described below.

The feedback spaces are allocated to PDSCHs scheduled by HARQ processes in each slot in a slot set whose HARQ processes are with the configuration mode being the enabled configuration mode; and feedback information corresponding to a respective HARQ process in the slot is inserted into a respective feedback space among the feedback spaces so that the feedback codebook is obtained. In an embodiment, the generation module 320 is configured to perform the operations described below.

The feedback spaces are allocated to PDSCHs scheduled by HARQ processes in a slot in which at least one enabled HARQ process exists and a PDSCH scheduled by the at least one enabled HARQ process is successfully detected; and feedback information corresponding to a respective HARQ process in the slot is inserted into a respective feedback space among the feedback spaces so that the feedback codebook is obtained. Feedback information corresponding to disabled HARQ processes in the slot is the NACK information.

In an embodiment, the feedback codebook does not include feedback information corresponding to HARQ processes in a slot whose all HARQ processes are with the configuration mode being the disabled configuration mode or a slot in which at least one enabled HARQ process exists and a PDSCH scheduled by each enabled HARQ process is unsuccessfully detected.

In an embodiment, the generation module 320 is configured to perform the operations described below.

The feedback space is allocated to the PDSCH scheduled by each enabled HARQ process, and no feedback space is allocated to the PDSCH scheduled by the disabled HARQ process; and the feedback information corresponding to a respective enabled HARQ process is inserted into the feedback space so that the feedback codebook is obtained.

In an embodiment, the feedback codebook further includes: a cell, a slot, a transmission block, and a code block group which are associated with the feedback information.

In an embodiment, the feedback codebook generation apparatus further includes a second receiving module.

The second receiving module is configured to receive the DCI, where the DCI includes a first parameter, a second parameter, and a third parameter of each HARQ process. The feedback codebook further includes the first parameter, the second parameter, and the third parameter which are associated with the feedback information, where the first parameter is used for indicating the number of transmissions of PDSCHs during the period from when the DCI is received to when a target HARQ process schedules a PDSCH; the second parameter is used for indicating the total number of transmissions of PDSCHs during the period from when the DCI is received to the end of a slot in which the target HARQ process schedules the PDSCH; and the third parameter is used for indicating the number of transmissions of PDSCHs scheduled by enabled HARQ processes during the period from when the DCI is received to the end of the slot in which the target HARQ process schedules the PDSCH.

In an embodiment, a third receiving module and a fourth receiving module are further included.

The third receiving module is configured to receive process group information, where the process group information includes enabled HARQ processes included in each group. The fourth receiving module is configured to receive the DCI, where the DCI is used for indicating a group which needs to report the feedback information.

In an embodiment, the generation module 320 is configured to perform the operations described below.

The feedback space is allocated to each HARQ process in the group which needs to report the feedback information; and feedback information corresponding to a respective HARQ process is inserted into the feedback space so that the feedback codebook is obtained.

In an embodiment, the feedback codebook further includes a cell, a HARQ process, a transmission block, and a code block group which are associated with the feedback information.

The feedback codebook generation apparatus provided in this embodiment and the feedback codebook generation method provided in the preceding embodiments belong to the same concept. For technical details not described in detail in this embodiment, reference may be made to any one of the preceding embodiments, and this embodiment has the same effects as performing the feedback codebook generation method.

The embodiments of the present application further provide a feedback codebook receiving apparatus. FIG. 13 is a structural diagram of a feedback codebook receiving apparatus according to an embodiment. As shown in FIG. 13, the feedback codebook receiving apparatus includes a configuration module 410 and a receiving module 420.

The configuration module 410 is configured to configure a configuration mode of a HARQ process, where the configuration mode of the HARQ process includes an enabled configuration mode and a disabled configuration mode. The receiving module 420 is configured to receive a feedback codebook according to the configuration mode of the HARQ process, where the feedback codebook includes feedback information corresponding to an enabled HARQ process.

The feedback codebook receiving apparatus in this embodiment configures configuration modes of HARQ processes, receives the feedback codebook for the enabled HARQ processes, and does not need to receive the feedback information for the disabled HARQ processes, which reduces the transmission overheads of the feedback codebook and improves the transmission efficiency.

In an embodiment, a first sending module is further included.

The first sending module is configured to send slot set information, where the slot set information includes a slot included in each slot set and a configuration mode of a HARQ process corresponding to each slot set.

In an embodiment, the feedback codebook includes feedback information corresponding to a respective HARQ process in each slot in a slot set whose HARQ processes are with the configuration mode being the enabled configuration mode, and the feedback codebook does not include the feedback information of the disabled HARQ process.

In an embodiment, the feedback codebook includes feedback information corresponding to a respective HARQ process in a slot in which at least one enabled HARQ process exists and a PDSCH scheduled by the at least one enabled HARQ process is detected successfully. Feedback information corresponding to disabled HARQ processes in the slot is the NACK information.

In an embodiment, the feedback codebook does not include feedback information corresponding to HARQ processes in a slot whose all HARQ processes are with the configuration mode being the disabled configuration mode or a slot in which at least one enabled HARQ process exists and a PDSCH scheduled by each enabled HARQ process is unsuccessfully detected.

In an embodiment, the feedback codebook includes the feedback information corresponding to a respective enabled HARQ process and does not include the feedback information of the disabled HARQ process.

In an embodiment, the feedback codebook further includes: a cell, a slot, a transmission block, and a code block group which are associated with the feedback information.

In an embodiment, a second sending module is further included.

The second sending module is configured to send the DCI, where the DCI includes a first parameter, a second parameter, and a third parameter of each HARQ process. The feedback codebook further includes the first parameter, the second parameter, and the third parameter which are associated with the feedback information, where the first parameter is used for indicating the number of transmissions of PDSCHs during the period from when the DCI is received to when a target HARQ process schedules a PDSCH; the second parameter is used for indicating the total number of transmissions of PDSCHs during the period from when the DCI is received to the end of a slot in which the target HARQ process schedules the PDSCH; and the third parameter is used for indicating the number of transmissions of PDSCHs scheduled by enabled HARQ processes during the period from when the DCI is received to the end of the slot in which the target HARQ process schedules the PDSCH.

In an embodiment, a third sending module and a fourth sending module are further included.

The third sending module is configured to send process group information, where the process group information includes enabled HARQ processes included in each group. The fourth sending module is configured to send the DCI, where the DCI is used for indicating a group which needs to report the feedback information.

In an embodiment, the feedback codebook includes feedback information of each HARQ process in the group which needs to report the feedback information.

In an embodiment, the feedback codebook further includes a cell, a HARQ process, a transmission block, and a code block group which are associated with the feedback information.

The feedback codebook receiving apparatus provided in this embodiment and the feedback codebook receiving method provided in the preceding embodiments belong to the same concept. For technical details not described in detail in this embodiment, reference may be made to any one of the preceding embodiments, and this embodiment has the same effects as performing the feedback codebook receiving method.

The embodiments of the present application further provide a communication node. The communication node may refer to the first communication node, that is, the data receiving terminal, and that is, the terminal reporting the feedback codebook, for example, the UE. In this case, the communication node may be configured to perform the preceding feedback codebook generation method. Alternatively, the communication node may refer to the second communication node, that is, the data sending terminal, and that is, the terminal receiving the feedback codebook, for example, the BS. In this case, the communication node may be configured to perform the preceding feedback codebook receiving method.

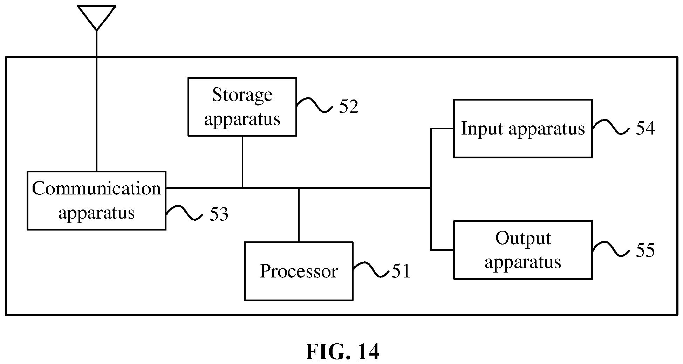

FIG. 14 is a schematic diagram illustrating a hardware structure of a communication node according to an embodiment. As shown in FIG. 14, the communication node provided in the present application includes a memory 52, a processor 51, and a computer program stored on the memory and capable of running on the processor, where when executing the program, the processor 51 implements the preceding feedback codebook generation method or the feedback codebook receiving method.

The communication node may further include the memory 52; one or more processors 51 may be provided in the communication node, and one processor 51 is used as an example in FIG. 14; the memory 52 is configured to store one or more programs; and when executed by the one or more processors 51, the one or more programs cause the one or more processors 51 to implement the feedback codebook generation method or the feedback codebook receiving method in the embodiments of the present application.

The communication node further includes a communication apparatus 53, an input apparatus 54, and an output apparatus 55.

The processor 51, the memory 52, the communication apparatus 53, the input apparatus 54, and the output apparatus 55 in the communication node may be connected through a bus or in other manners, and the connection through the bus is used as an example in FIG. 14.

The input apparatus 54 may be configured to receive inputted digital or character information and generate key signal input related to user settings and function control of the communication node. The output apparatus 55 may include a display device, for example, a display screen.

The communication apparatus 53 may include a receiver and a sender. The communication apparatus 53 is configured to perform information transceiving and communication under the control of the one or more processors 51.

As a computer-readable storage medium, the memory 52 may be configured to store software programs, computer-executable programs, and modules such as program instructions/modules (for example, the configuration mode determination module 310 and the generation module 320 in the feedback codebook generation apparatus) corresponding to the feedback codebook generation method described in the embodiments of the present application. The memory 52 may include a program storage region and a data storage region, where the program storage region may store an operating system and an application program required by at least one function, and the data storage region may store data or the like created according to the use of the communication node. Additionally, the memory 52 may include a high-speed random-access memory and may further include a non-volatile memory, for example, at least one magnetic disk memory, a flash memory, or another non-volatile solid-state memory. In some examples, the memory 52 may include memories which are remotely disposed with respect to the processor 51 and these remote memories may be connected to the communication node 10 via a network. Examples of the preceding network include, but are not limited to, the Internet, an intranet, a local area network, a mobile communication network, and a combination thereof.

The embodiments of the present application further provide a storage medium for storing a computer program which, when executed by a processor, implements the feedback codebook generation method or the feedback codebook receiving method according to any one of the embodiments of the present application.

The feedback codebook generation method includes the following.

The configuration mode of the HARQ process is determined, where the configuration mode of the HARQ process includes the enabled configuration mode and the disabled configuration mode; and the feedback codebook is generated according to the configuration mode of the HARQ process, where the feedback codebook includes the feedback information corresponding to the enabled HARQ process.

The feedback codebook receiving method includes the following.

The configuration mode of the HARQ process is configured, where the configuration mode of the HARQ process includes the enabled configuration mode and the disabled configuration mode; and the feedback codebook is received according to the configuration mode of the HARQ process, where the feedback codebook includes the feedback information corresponding to the enabled HARQ process.

A computer storage medium in the embodiments of the present application may adopt any combination of one or more computer-readable media. The computer-readable media may be computer-readable signal media or computer-readable storage media. The computer-readable storage medium may be, for example, but is not limited to, an electrical, magnetic, optical, electromagnetic, infrared, or semiconductor system, apparatus, or element, or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable CD-ROM, an optical memory device, a magnetic memory device, or any suitable combination thereof. The computer-readable storage medium may be any tangible medium including or storing a program. The program may be used by or used in conjunction with an instruction execution system, apparatus, or element. The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may further be any computer-readable medium other than the computer-readable storage medium. The computer-readable medium may send, propagate, or transmit the program used by or used in conjunction with the instruction execution system, apparatus, or element.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, partly on the user computer, as a stand-alone software package, partly on the user computer and partly on a remote computer, or entirely on the remote computer or a server. In the case related to the remote computer, the remote computer may be connected to the user computer via any type of network including a local area network (LAN) or a wide area network (WAN) or may be connected to an external computer (for example, via the Internet through an Internet service provider).

The above are only example embodiments of the present application.

It is to be understood by those skilled in the art that the term user terminal encompasses any suitable type of wireless user devices, for example, a mobile phone, a portable data processing apparatus, a portable web browser, or a vehicle-mounted mobile station.

In general, various embodiments of the present application may be implemented in hardware or special-purpose circuits, software, logics, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow in the drawings of the present application may represent program steps, or may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), an optical memory apparatus and system (a digital video disc (DVD) or a compact disc (CD)). Computer-readable media may include non-transitory storage media. The data processor may be of any type suitable for the local technical environment such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

## Claims

1. A feedback codebook generation method, comprising:
determining a configuration mode of a Hybrid Automatic Repeat reQuest, HARQ, process, wherein the configuration mode of the HARQ process comprises an enabled configuration mode and a disabled configuration mode; and
generating a feedback codebook according to the configuration mode of the HARQ process, wherein the feedback codebook comprises feedback information corresponding to an enabled HARQ process.

2. The method according to claim 1, further comprising:
receiving slot set information, wherein the slot set information comprises: a slot comprised in each slot set and a configuration mode of a HARQ process corresponding to a respective slot set.

3. The method according to claim 2, wherein the generating the feedback codebook according to the configuration mode of the HARQ process comprises:
allocating feedback spaces to physical downlink shared channels, PDSCHs, scheduled by HARQ processes in each slot in a slot set whose HARQ processes are with the configuration mode being the enabled configuration mode; and
inserting feedback information corresponding to a respective HARQ process in each slot into the feedback spaces to obtain the feedback codebook.

4. The method according to claim 1, wherein the generating the feedback codebook according to the configuration mode of the HARQ process comprises:
allocating feedback spaces to PDSCHs scheduled by HARQ processes in a slot in which at least one enabled HARQ process exists and a PDSCH scheduled by the at least one enabled HARQ process is successfully detected; and
inserting feedback information corresponding to a respective HARQ process in the slot into the feedback spaces to obtain the feedback codebook;
wherein feedback information corresponding to disabled HARQ processes in the slot is negative acknowledgment, NACK, information.

5. The method according to claim 1, wherein the feedback codebook does not comprise feedback information corresponding to HARQ processes in a slot whose all HARQ processes are with the configuration mode being the disabled configuration mode or a slot in which at least one enabled HARQ process exists and a PDSCH scheduled by each enabled HARQ process is unsuccessfully detected.

6. The method according to claim 1, wherein the generating the feedback codebook according to the configuration mode of the HARQ process comprises:
allocating a feedback space to a PDSCH scheduled by each enabled HARQ process, and allocating no feedback space to a PDSCH scheduled by a disabled HARQ process; and
inserting feedback information corresponding to a respective enabled HARQ process into the feedback space to obtain the feedback codebook.

7. The method according to any one of claims 2 to 6, wherein the feedback codebook further comprises: a cell, a slot, a transmission block, and a code block group which are associated with the feedback information.

8. The method according to claim 6, further comprising:
receiving downlink control information, DCI, wherein the DCI comprises: a first parameter, a second parameter, and a third parameter of each HARQ process;
wherein the feedback codebook further comprises the first parameter, the second parameter, and the third parameter which are associated with the feedback information;
wherein the first parameter is used for indicating a number of transmissions of PDSCHs during a period from when the DCI is received to when a target HARQ process schedules a PDSCH;
the second parameter is used for indicating a total number of transmissions of PDSCHs during a period from when the DCI is received to an end of a slot in which the target HARQ process schedules the PDSCH; and
the third parameter is used for indicating a number of transmissions of PDSCHs scheduled by enabled HARQ processes during the period from when the DCI is received to the end of the slot in which the target HARQ process schedules the PDSCH.

9. The method according to claim 1, further comprising:
receiving process group information comprising, wherein the process group information comprises: enabled HARQ processes comprised in each group; and
receiving DCI, wherein the DCI is used for indicating a group which needs to report feedback information.

10. The method according to claim 9, wherein generating the feedback codebook according to the configuration mode of the HARQ process comprises:
allocating a feedback space to each HARQ process in the group which needs to report the feedback information; and
inserting feedback information corresponding to a respective HARQ process into the feedback space to obtain the feedback codebook.

11. The method according to claim 9, wherein the feedback codebook further comprises: a cell, a HARQ process, a transmission block, and a code block group which are associated with the feedback information.

12. A feedback codebook receiving method, comprising:
configuring a configuration mode of a Hybrid Automatic Repeat reQuest, HARQ, process, wherein the configuration mode of the HARQ process comprises an enabled configuration mode and a disabled configuration mode; and
receiving a feedback codebook according to the configuration mode of the HARQ process, wherein the feedback codebook comprises feedback information corresponding to an enabled HARQ process.

13. The method according to claim 12, further comprising:
sending slot set information, wherein the slot set information comprises: a slot comprised in each slot set and a configuration mode of a HARQ process corresponding to each slot set.

14. The method according to claim 13, wherein the feedback codebook comprises feedback information corresponding to a respective HARQ process in each slot in a slot set whose HARQ processes are with the configuration mode being the enabled configuration mode, and the feedback codebook does not comprise feedback information of a disabled HARQ process.

15. The method according to claim 12, wherein the feedback codebook comprises feedback information corresponding to a respective HARQ process in a slot in which at least one enabled HARQ process exists and a PDSCH scheduled by the at least one enabled HARQ process is detected successfully;
wherein feedback information corresponding to disabled HARQ processes in the slot is NACK information.

16. The method according to claim 12, wherein the feedback codebook does not comprise feedback information corresponding to HARQ processes in a slot whose all HARQ processes are with the configuration mode being the disabled configuration mode or a slot in which at least one enabled HARQ process exists and a PDSCH scheduled by each enabled HARQ process is unsuccessfully detected.

17. The method according to claim 12, wherein the feedback codebook comprises feedback information corresponding to a respective enabled HARQ process and does not comprise feedback information of a disabled HARQ process.

18. The method according to any one of claims 13 to 17, wherein the feedback codebook further comprises: a cell, a slot, a transmission block, and a code block group which are associated with the feedback information.

19. The method according to claim 17, further comprising:
sending downlink control information, DCI, wherein the DCI comprises a first parameter, a second parameter, and a third parameter of each HARQ process;
wherein the feedback codebook further comprises the first parameter, the second parameter, and the third parameter which are associated with the feedback information;
wherein the first parameter is used for indicating a number of transmissions of PDSCHs during a period from when the DCI is received to when a target HARQ process schedules a PDSCH;
the second parameter is used for indicating a total number of transmissions of PDSCHs during a period from when the DCI is received to an end of a slot in which the target HARQ process schedules the PDSCH; and
the third parameter is used for indicating a number of transmissions of PDSCHs scheduled by enabled HARQ processes during the period from when the DCI is received to the end of the slot in which the target HARQ process schedules the PDSCH.

20. The method according to claim 12, further comprising:
sending process group information, wherein the process group information comprises enabled HARQ processes comprised in each group; and
sending DCI used for indicating a group which needs to report feedback information.

21. The method according to claim 20, wherein the feedback codebook comprises feedback information of each HARQ process in the group which needs to report the feedback information.

22. The method according to claim 20, wherein the feedback codebook further comprises: a cell, a HARQ process, a transmission block, and a code block group which are associated with the feedback information.

23. A communication node comprising a memory, a processor, and a computer program which is stored on the memory and capable of running on the processor, wherein the processor, when executing the computer program, implements the feedback codebook generation method according to any one of claims 1 to 11 or the feedback codebook receiving method according to any one of claims 12 to 22.

24. A computer-readable storage medium for storing a computer program which, when executed by a processor, implements the feedback codebook generation method according to any one of claims 1 to 11 or the feedback codebook receiving method according to any one of claims 12 to 22.
